# EUROPEAN PATENT APPLICATION

(11) **EP 1 225 775 A1**
(43) Date of publication of application: **24.07.2002**
(21) Application number: 01850015.7
(22) Date of filing: 19.01.2001
(51) Int. Cl.: H04Q 7/32

(54) **Method and a device for telecommunication**

(71) Applicant: TELEFONAKTIEBOLAGET LM ERICSSON, 126 25 Stockholm (SE)
(72) Inventor: Swerup, Jan, 741 95 Knivsta (SE)
(74) Representative: Dahnér, Christer

(57) **Abstract**

The present invention relates to a phone interfacing device (PID) associated with a public switched telephone network (PSTN), said device being a part of a local area communication system. The PID is associated with a subscriber number and a call via the PSTN to that subscriber number has to be forwarded by the PID to the correct subscriber's Mobile Station. The local interface module of the PID has to be configured to a special subscriber number associated with a Mobile Station within the local area communication system. The invention is a configuration method for associating said PID to a Mobile Station. Identification data is transmitted from the Mobile Station to the PID through a Public Land Mobile Network, associated with the Mobile Station, and the PSTN.

## Description

### Technical Field

The present invention relates to a method and a device for telecommunication. More particularly, the invention relates to a method for configuring and a device arranged for configuration according to said method.

### Background of the Invention

From the Patent document US 5 983 100 is earlier known a local area communication system (LACS) comprising a plurality of locally-positioned communication devices, such as Mobile Stations, computer terminals, head sets, etc. Any two locally-positioned communication devices are selectably operable to communicate with each other over a preselected communication medium, and further wherein one of which forms a portion of an external or non-local communications network. Each of the locally-positioned communication devices is also provided with a corresponding local interface module for short-range communication. Said interface module is capable of two-way communication both receiving an incoming communication signal and transforming it into a local transport signal suitable for local transmission, and transforming a local transport signal into an outgoing communication signal for transmitting into the local area communication system in accordance with at least one preselected common protocol. Either the incoming communication signal or the local transport signal may be either analogue or digital, suitably modulated according to known methods. Furthermore, either of these signals may comprise voice, video, or data, or any combination thereof with voice and data capable of being transmitted over a common communication channel. The local interface module may be functionally and structurally integrated into the circuitry of the corresponding communication device. Or, in an alternative aspect, the local interface module may be a pluggable module adapted to be received in a module port formed in the corresponding communication device.

The known system includes at least one Mobile Station associated with a cellular mobile telecommunication network, at least one phone interfacing device (PID) associated with a public switched telephone network (PSTN). In addition, the PID can be a radio-enhanced phone interfacing device or a conventional corded phone having a handset connected by wire means to the cradle unit. Each of these devices is coupled to a corresponding local interface module which comprises a transceiver that is capable of selectably effectuating a local communication link between the local interface module of which it is a part and any other local interface module. The radio-enhanced phone interfacing device may be a conventional cordless phone base unit coupled with a local interface module, or alternatively, a local interface module directly-connectable to the PSTN with enhanced functionality.

The present invention relates to a phone interfacing device (PID) associated with a public switched telephone network (PSTN), said device being a part of a local area communication system. The PID is associated with a subscriber number and a call via the PSTN to that subscriber number has to be forwarded by the PID to the correct subscriber's Mobile Station. The local interface module of the PID has to be configured to a special subscriber number associated with a Mobile Station within the local area communication system.

The configuration or pre-programming of the PID is done before it is connected to the systems and it is done by someone skilled in the art, e.g. a person associated with the manufacturing company, a technical support company etc.

It is desirable of economic and technical reasons to use an easier configuration procedure that is possible for a non-skilled person to perform.

### Summary of the invention

It is an object of the present invention to provide a phone interfacing device (PID) having an easier configuration procedure making a Mobile Station selectably operable as a cordless phone handset to place or receive calls over the Public Switched Telephone Network (PSTN).

Said object is achieved according to the present invention by transmitting identification data from the Mobile Station to the phone interfacing device PID through a Public Land Mobile Network, associated with the Mobile Station, and the Public Switched Telephone Network (PSTN).

More particularly, the present invention is a configuration method for associating a radio-enhanced Phone-Interfacing Device (PID) to a Mobile Station within a Local Area Communication System (LACS). The radio-enhanced Phone-Interfacing Device (PID) is connected to and associated with a subscriber number of a Public Switched Telephone Network (PSTN) and the Mobile Station, having a subscriber identification number associating said Mobile Station to a Public Land Mobile Network (PLMN). Said configuration method makes it possible to establish a two-way communication through an air interface between the Mobile Station and said radio-enhanced Phone-Interfacing Device to the Public Switched Telephone Network (PSTN). Said invented method is characterised in that it comprises following steps:
- starting and running an installation software in the radio-enhanced Phone-Interfacing Device when the radio-enhanced Phone-Interfacing Device is connected to the Public Switched Telephone Network (PSTN);
- waiting for identification data from the Mobile Station within said Local Area Communication System (LACS);
   - transmitting identification data from the Mobile Station through the Public Land Mobile Network and Public Switched Telephone Network (PSTN) to said radio-enhanced Phone-Interfacing Device;
   - storing said transmitted identification data in a memory in the radio-enhanced Phone-Interfacing Device before terminating the installation software.

The present invention also relates to a radio-enhanced Phone-Interfacing Device (PID), which could be designed as a plug-in unit for a telephone jack connected to a Public Switched Telephone Network (PSTN).

In more detail, the present invention relates to a radio-enhanced Phone-Interfacing Device (PID) arranged for configuration in a Local Area Communication System (LACS). Said radio-enhanced Phone-Interfacing Device (PID) is connectable to a Public Switched Telephone Network (PSTN), and has means for establishing a two-way communication through an air interface between a Mobile Station within the Local Area Communication System (LACS) and the Public Switched Telephone Network (PSTN). The PID is characterised in that it comprises a controller having an associated software storage for storing an installation software to be run by the controller when the radio-enhanced Phone-Interfacing Device is connected to the Public Switched Telephone Network (PSTN), causing the invented device to:
- wait for identification data from the Mobile Station within said Local Area Communication System (LACS);
- receive identification data transmitted from the Mobile Station through the Public Land Mobile Network and Public Switched Telephone Network (PSTN) to said radio-enhanced Phone-Interfacing Device;
- store said transmitted identification data in a memory in the radio-enhanced Phone-Interfacing Device before terminating the installation software.

The invented method and device provide an easy configuration procedure that is possible for a non-skilled person to perform.

Further one advantage is that the invented configuration method has not to be performed by any professional and expensive support person and, hence, an installation of the PID will not require any additional expensive installation costs.

The present invention will now be described in more detail by use of preferred embodiments and with reference to the enclosed drawings.

### Brief description of the drawings

Figure 1 illustrates a block diagram of a Local Area Communication System (LACS).
Figure 2 illustrates an implementation of a Local Area Communication System comprising a Mobile Station and a radio-enhanced phone interfacing device.
Figure 3 is a block diagram of a local interface module adapted for use with the Mobile Station.
Figure 4 is a block diagram of a local interface module adapted for use with the directly-connectable home base station that is associated with the PSTN.
Figure 5 is a flow-chart illustrating the configuration method according to the invention.

### Preferred embodiments

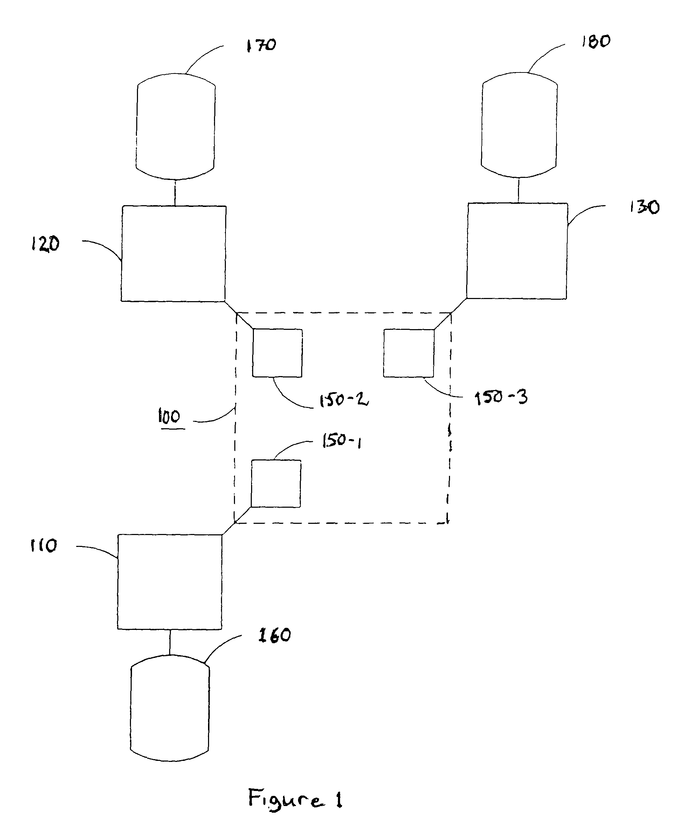

Figure 1 illustrates a block diagram of a Local Area Communication System (LACS), generally denoted by reference number 100. Reference numeral 110 refers to a radio-enhanced phone interfacing device and a telephone jack coupled to a public switched telephone network (PSTN) 160. Reference numeral 120 refers to a known Mobile Station associated with a Public Land Mobile Network (PLMN) 170. Reference numeral 130 refers to an electronic data terminal that may be associated with a local area network (LAN) 180. Reference numerals 150-1 through 150-3 refer to three local interface modules. The local interface module 150-1 is coupled to the radio-enhanced phone interfacing device 110, the local interface module 150-3 is coupled to the local data terminal 130 and the local module interface 150-2 is coupled to the Mobile Station 120. The person of ordinary skill in the art will appreciate that although the local interface modules 150-1 through 150-3 are shown as separate functional blocks, they are capable of being integrated structurally into their respective communication devices 110, 120 and 130. Furthermore, the radio-enhanced phone interfacing device may be such that its associated local interface module 150-1 is functionally integrated into its native circuitry as well.

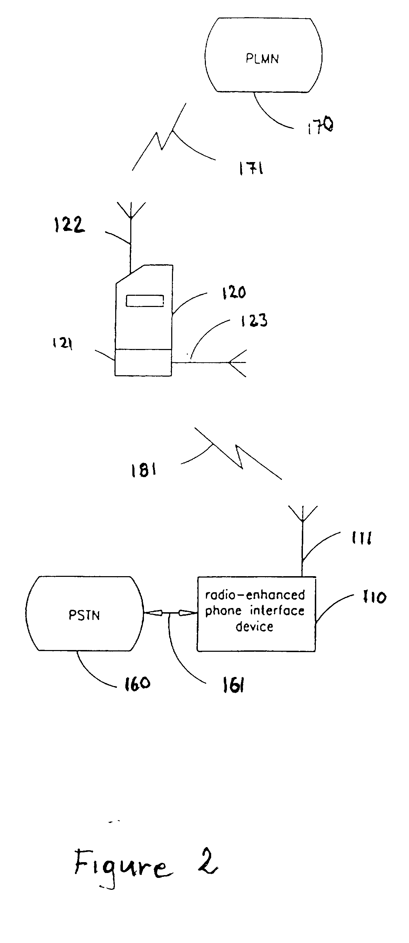

Referring now to Figure 2 therein is shown an implementation of a Local Area Communication System comprising a Mobile Station 120 and a radio-enhanced phone interfacing device 110. Reference numeral 110 is the radio-enhanced phone interfacing device that is associated with the PSTN 160 for external land-line communication. Reference numeral 161 is the associative path between the PSTN 160 and the radio-enhanced phone-interfacing device 110. The communication signals on this path 161 may be analogue or digital, and further, in a specific embodiment be a T1 phone line, or an Integrated Services Digital Network (ISDN) connection, or a high-capacity Asymmetric Digital Subscriber Line (ADSL). The radio-enhanced phone interfacing device 110, which is shown to have a local antenna 111 for local communication, includes a local interface module.

The Mobile Station 120 is associated with the PLMN 170 for cellular communication. The cellular path 171 may be effectuated between the Mobile Station 120 and the PLMN 170 using any one of the common cellular transmission standards such as the Advanced Mobile Phone Service (AMPS) System standard or the Global System for Mobile communication (GSM) standard. The Mobile Station 120 is equipped with a non-local antenna 122 to facilitate transmission and reception of cellular communication signals between the Mobile Station 120 and a base station (not shown) of the PLMN. In addition, the Mobile Station 120 is coupled to a local interface module 121 having a local antenna 123 for local communication. The coupling between the Mobile Station 120 and the local interface module 121 is such that the non-local cellular communication signals over the cellular path 171 are selectably convertible to local communication signals, and vice versa, to be transmitted on a local communication link. A local radio communication link 181 is selectably established between the Mobile Station 120 and the radio-enhanced phone interfacing device 110 to place a call over the PSTN 160 or receive a call from the PSTN.

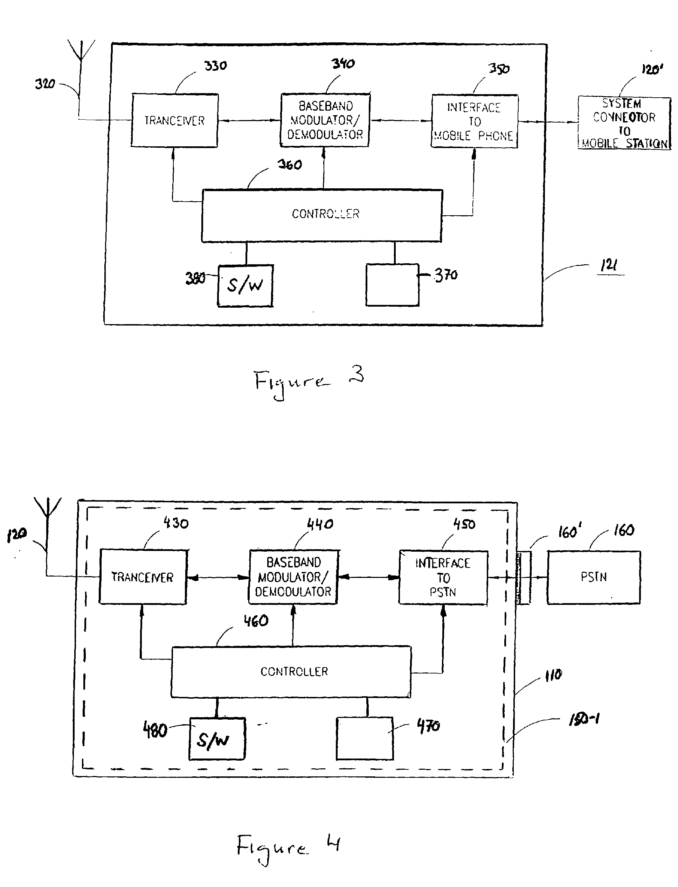

Figure 3 is a block diagram of a local interface module 121 adapted for use with the Mobile Station 120 that is associated with the PLMN 170. Figure 4 is a block diagram of a local interface module 150-1 adapted for use with the directly connectable telephone jack 160' that is associated with the PSTN 160. These two local interface modules, 121 and 150-1, are substantially identical to one another. The modules will be described with reference to Figure 3 and Figure 4, but the reference numbers corresponding to Figure 4 will be put between brackets. An antenna 320 (420) is operable to receive and transmit local communication signals, which may be effectuated using either standard wireless communication protocols or a proprietary protocol, on a single local communication medium. The antenna is electrically connected to a radio transceiver 330 (430). As is well known in the art, the functionality of the radio transceiver 330 (430) may be implemented in numerous known ways, with attendant electronic circuitry for tuning etc. The signal output from the radio transceiver 330 (430) is then fed into a baseband modulator/demodulator block 340 (440), which either extracts an information signal from the local carrier radio wave or modulates the local carrier radio wave using the information signal. The baseband modulator/demodulator block 340 (440) is coupled to an interface circuitry block 350 (450).

The interface circuitry block 350 effectuates appropriate conversion of communication signals between the local interface module 310 and a system connector 120' coupled to the Mobile Station 120. The interface circuitry block 450 effectuates appropriate conversion of communication signals between the directly-connectable local interface module 150-1 and the PSTN 160 via the telephone jack 160'.

A controller block 360 (460) is preferably provided which is in circuit communication with the radio transceiver 330 (430), the baseband modulator/demodulator 340 (440) and the local interface module 310 (410), in order to supervise the bi-directional transfer of the information signals. The controller block 360 (460) may comprise a microprocessor, a plurality of control switches, memory 370 (470) and/or hard-wired digital logic. A software application storage S/W 380 (480) is connected to the controller 360 (460).

According to the invention, a radio-enhanced Phone-Interfacing Device (PID) is designed for a Local Area Communication System (LACS). Said radio-enhanced Phone-Interfacing Device (PID) is connectable to a Public Switched Telephone Network (PSTN) and comprises means for establishing a two-way communication through an air interface between a Mobile Station within the Local Area Communication System (LACS) and the Public Switched Telephone Network (PSTN). The device has a controller having associated software storage for storing installation software to be run by the controller when the radio-enhanced Phone-Interfacing Device is connected to the Public Switched Telephone Network (PSTN). The PID installation software and the controller subsequently cause the PID to:
- wait for identification data from the Mobile Station within said Local Area Communication System (LACS);
- receive identification data transmitted from the Mobile Station through the Public Land Mobile Network and Public Switched Telephone Network (PSTN) to said radio-enhanced Phone-Interfacing Device;
- store said transmitted identification data in a memory in the radio-enhanced Phone-Interfacing Device before terminating the installation software

The means for establishing a two-way communication through an air interface between a Mobile Station within the Local Area Communication System (LACS) and the Public Switched Telephone Network (PSTN) is a Local Interface Module corresponding to an essentially similar Local Interface Module in the Mobile Station. The Local Interface Modules may be designed according to the Bluetooth™ standard and comprise Bluetooth™ circuitry. Bluetooth™ is a standard defined system for providing local wireless connectivity between portable devices. It is particularly suitable for *ad hoc* networking. The air interface has been optimised to provide maximum immunity against interference in the 2,45 GHz band. Several leading manufacturers of personal computers and telecommunications equipment support the system. The transceivers of the system use frequency-hop (FH) spread spectrum, since this technology better supports low-cost, low-power radio implementations. Such a system divides the frequency band into several hop channels. During a connection, radio transceivers hop from one channel to another in a pseudo-random fashion. Maximum immunity to interference and error-correction schemes insures safe transmission.

The controller and installation software might cause the PID to transmit a question to the Mobile Station requiring said identification data. Said question may be displayed on a display or screen on the Mobile Station or automatically responded to by means of pre-stored identification information.

The radio-enhanced phone-interfacing device 110, PID, may be designed as a plug-in unit. Said unit 110 is installed by means of a male contact that is plugged into a corresponding female contact, a jack 160', that is connected to a PSTN 160 for external land-line communication.

The PID 110 is associated with one Mobile Station 120 and needs identification information that locks the PID to that Mobile Station. When the PID is installed, it is powered by the PSTN and the controller 460 is running an installation software. The PID 460 is in a start up mode as long as the installation software is running and will not change from the start up mode to the working mode until the installation software has finished all installation steps. Two of the installation steps of the installation software are the acquiring and storing identification data from the Mobile Station.

When the PID 110 is newly attached to the PSTN contact, the user of a Mobile Station 120 has to lock or configure the PID to the user's Mobile Station. The controller 460 of the PID is running the installation software that is requiring identification data of the Mobile Station. The controller and installation software also causes the PID to transmit a question to the Mobile Station requiring authentication data. Said question may be displayed on a display or screen on the Mobile Station. The invented method for configuring the PID comprises steps that now will be described in the following text.

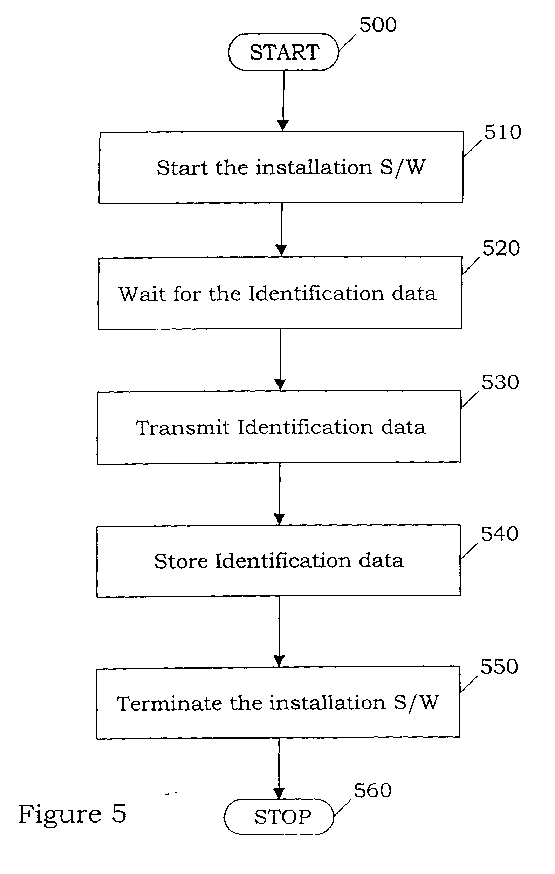

Figure 5 is a flow-chart illustrating the configuration method according to the invention for associating a radio-enhanced Phone-Interfacing Device 110 to a Mobile Station 120 within a Local Area Communication System (LACS) 100. The radio-enhanced Phone-Interfacing Device (PID) 110 is connected to and associated with a subscriber number of a Public Switched Telephone Network (PSTN) 160. The Mobile Station 120 has a subscriber identification number associating said Mobile Station 120 to a Public Land Mobile Network (PLMN) 170. The configuration method makes it possible to establish a two-way communication through an air interface 181 between the Mobile Station and Public Switched Telephone Network (PSTN) via said radio-enhanced Phone-Interfacing Device 110. In the first step, 510, an installation software is started and run when the radio-enhanced Phone-Interfacing Device has been connected to the Public Switched Telephone Network (PSTN). In the next step, 520, the PID will be waiting for identification data from the Mobile Station within said Local Area Communication System (LACS). In the succeeding step, 530, identification data is transmitted from the Mobile Station through the Public Land Mobile Network and Public Switched Telephone Network (PSTN) to said radio-enhanced Phone-Interfacing Device. Said transmitted identification data is stored, in step 540, in a memory 470 in the radio-enhanced Phone-Interfacing Device before terminating the running of the installation software, step 550.

In a second embodiment of the invented method (not shown), a question, requiring authentication data, is transmitted to the Mobile Phone, between step 510 and 550. Said question may be displayed on a displaying device of the Mobile Station 120. Said authentication data is a serial number of the radio-enhanced Phone-Interfacing Device (PID).

The user of the Mobile Station 120 has to know the subscriber number associated to the jack that the user attaches or plugs in the PID. The user dials the subscriber number on the Mobile Station 120 and the call will be switched in the common way from the PLMN system 170 to PSTN system 160. The PSTN system 160 forwards the call to the PID. The call comprises the subscriber identification number of the calling Mobile Station 120 and the installation software will store the number in a memory. The installation software will return a question to the user. In a preferred embodiment of the invented method the question may be displayed on the display of the user's Mobile Station. The installation software asks for authentication data, such as a password, that is pre-programmed in a memory of the PID e.g. by the manufacturer. The user has to know the correct password, which may have been handled to the user when buying the PID. For an example, the serial number of the PID could be chosen as password. The controller will accept when the user has answered the question by transmitting the correct password. An acceptance response may be sent in return via the PSTN and PLMN systems to the mobile phone, but the PID could establish contact via the local area communication system instead. The acceptance response could be done in the start up mode as well as in the working mode. The user terminates the installation call.

When the PID is correctly installed the user can choose between making a call via the PLMN or the PSTN.

## Claims

1. A configuration method for associating a radio-enhanced Phone-Interfacing Device to a Mobile Station within a Local Area Communication System (LACS), wherein the radio-enhanced Phone-Interfacing Device (PID) is connected to and associated with a subscriber number of a Public Switched Telephone Network (PSTN) and the Mobile Station, having subscriber identification number associating said Mobile Station to a Public Land Mobile Network (PLMN), said configuration method making it possible to establishing a two-way communication through an air interface between the Mobile Station and Public Switched Telephone Network (PSTN) via said radio-enhanced Phone-Interfacing Device, said method is **characterised in that** it comprises following steps:
- starting and running an installation software when the radio-enhanced Phone-Interfacing Device is connected to the Public Switched Telephone Network (PSTN);
- waiting for identification data from the Mobile Station within said Local Area Communication System (LACS);
- transmitting identification data from the Mobile Station through the Public Land Mobile Network and Public Switched Telephone Network (PSTN) to said radio-enhanced Phone-Interfacing Device;
- storing said transmitted identification data in a memory in the radio-enhanced Phone-Interfacing Device before terminating the installation software.

2. A configuration method according to claim 1, **characterised in that** it also comprises the following step:
- a question requiring authentication data is transmitted to the Mobile Station and displayed on a display of the Mobile Station.

3. A configuration method according to claim 2, **characterised in that**, said authentication data is a serial number of the radio-enhanced Phone-Interfacing Device (PID).

4. A radio-enhanced Phone-Interfacing Device (PID) arranged for configuration in a Local Area Communication System (LACS), said radio-enhanced Phone-Interfacing Device (PID) is connectable to a Public Switched Telephone Network (PSTN), said radio-enhanced Phone-Interfacing Device having means for establishing a two-way communication through an air interface between a Mobile Station within the Local Area Communication System (LACS) and the Public Switched Telephone Network (PSTN), said device is **characterised in that** it comprises a controller having an associated software storage for storing an installation software to be run by the controller when the radio-enhanced Phone-Interfacing Device is connected to the Public Switched Telephone Network (PSTN), the controller and installation software causing the device to:
- wait for identification data from the Mobile Station within said Local Area Communication System (LACS);
- receive identification data transmitted from the Mobile Station through the Public Land Mobile Network and Public Switched Telephone Network (PSTN) to said radio-enhanced Phone-Interfacing Device;
- store said transmitted identification data in a memory in the radio-enhanced Phone-Interfacing Device before terminating the installation software.

5. A radio-enhanced Phone-Interfacing Device (PID) according to claim 4,
**characterised in that**, said means for establishing a two-way communication through an air interface between a Mobile Station within the Local Area Communication System (LACS) and the Public Switched Telephone Network (PSTN) is a Local Interface Module corresponding to an essentially similar Local Interface Module in the Mobile Station.

6. A radio-enhanced Phone-Interfacing Device (PID) according to claim 4 or 5, **characterised in that** the Local Interface Modules comprises Bluetooth™ circuitry.

7. A radio-enhanced Phone-Interfacing Device (PID) according to any of claims 4 - 6, **characterised in that** the controller and installation software cause the PID to transmit a question to the Mobile Station requiring said identification data.

8. A radio-enhanced Phone-Interfacing Device (PID) according to any of claims 4 - 7, **characterised in that** the controller and installation software cause the PID to transmit a question to the Mobile Station requiring authentication data.
